# EUROPEAN PATENT SPECIFICATION

(11) **EP 2 487 396 B1**
(45) Date of publication and mention of the grant of the patent: **09.04.2014**
(21) Application number: 12154735.0
(22) Date of filing: 09.02.2012
(51) Int. Cl.: F16K 31/50

(54) **Lockshield unit for check valves in heating systems**
Verschraubungseinheit für Rückschlagventile in Heizsystemen
Unité de cache-entrée pour clapets anti-retour dans les systèmes de chauffage

(30) Priority: 11.02.2011 IT MI20110203
(43) Date of publication of application: 15.08.2012
(73) Proprietor: Far Rubinetterie S.P.A., 28024 Gozzano (NO) (IT)
(72) Inventor: Allesina, Guerrino, 28020 Gozzano (IT)
(74) Representative: Siniscalco, Fabio

(56) References cited:
- EP-B1- 1 456 568
- GB-A- 449 119
- US-A- 3 503 586

## Description

### BACKGROUND OF THE INVENTION

The present invention relates to a lockshield unit being a part of a valve for controlling the circulation of a thermal fluid in heating systems, wherein the lockshield unit can be both applied to individual valves, and distribution manifolds of a thermal fluid, for example zone-type heating systems and radiant panel systems or the like.

### BACKGROUND OF THE ART

Heating systems of the above-mentioned types are known, where the thermal fluid is to be circulated in the several areas and/or various radiating elements under balanced flow-rate and pressure conditions, i.e. suitable to allow for a proper distribution and circulation of the thermal fluid in the individual heating areas or individual radiating elements.

Therefore, in those systems of the above-mentioned type special control valves are used to adjust the flow-rate of the thermal fluid which, during the installation step, require to be suitably set in order to allow for the circulation of a predetermined fluid flow rate.

The control valves of the above-mentioned type, are generally provided with a lockshield unit comprising a closure plug member that is supported in order to be moved to any intermediate position, between a first backward completely opened position and a second forward closed position against a sealing seat; the closure plug member is placed at a front end of a control stem that can be screwed within a guide bush, which can be in turn screwed within a valve body, or within a suitable seat of a distribution manifold for the thermal fluid in a heating system.

A control knob is attached to the other rear end of the control stem in order to rotate and axially move along with the same control stem of the closure plug member. The operating connection between the control knob and the control stem is normally carried out by mechanically attaching the control knob by means of a screw or other suitable connection system.

A similar solution, which has been adopted in most of the cases, has several drawbacks both in the assembly step and thereafter, after the valve and/or the manifold have been installed in a heating system.

Particularly, the use of the current mechanical systems connecting the control knob to the control stem of the closure plug member make the automatic assembly operations of the lockshield unit difficult and expensive during the construction step. Furthermore, when the lockshield unit has been screwed within a valve body and/or a manifold, in the case where an operator has to check and/or replace the lockshield unit, he must necessarily remove the control knob by operating with a suitable tool; this operation is not always easy, particularly when the lockshield unit is in an uncomfortable or difficult-to-reach position.

Finally, in the lockshield assemblies of a known type, the control knob thereof being provided with numbers and/or reference marks indicative of the adjustment positions of the closure plug member; the fact that the control knob rotates and simultaneously moves axially with the closure plug member can make the reading and the correct location of the position adjusted by the closure plug member difficult.

US-A-3503586 shows a valve having a closure member actuated by a screw-threaded spindle, wherein the operating knob is angularly connected with but axially slidable on the end of the spindle and it is formed with a resilient extension which surrounds the spindle and carries projections which snap into a groove of the valve body when the knob is pushed on the spindle, so that the operating knob is retained in axial position while being free to rotate.

### OBJECTS OF THE INVENTION

The need thus exists to find a novel and different solution suitable to solve the above-discussed problems, by providing for a different operating connection system between the control stem of the closure plug member and the control knob, in a lockshield unit of the above-discussed type.

Particularly, a first object of the invention is to provide a lockshield unit for check valves of the flow of a thermal fluid in heating systems, or for manifolds, which has an extreme constructional simplification of the operating connection between the knob and the control rod of the closure plug member, and which facilitates the automatic assembly operations of the lockshield unit.

A still further object of the invention is to provide a lockshield unit as discussed above, a check valve and/or a manifold, respectively, which are provided with a similar lockshield unit, which allow for an easy and quick removal of the control knob, without having to resort to any particular tool, as well as a subsequent repositioning thereof and the simultaneous operating connection to the operator's control stem, manually in a simple and quick manner as well, during any checking and/or removal operations of the lockshield unit.

A yet further object of the invention is to provide a lockshield unit as discussed above, which not only can be easily assembled and manipulated, but also allows for a suitable location of the adjusted position of the closure plug member and an easy reading of the numeration and/or reference marks written on the control knob.

### BRIEF DESCRIPTION OF THE INVENTION

The above can be achieved by means of a lockshield unit for check valves and/or for distribution manifolds in heating systems, having the characteristics of claim 1.

### BRIEF DESCRIPTION OF THE DRAWINGS

These and further characteristics of a lockshield unit according to the invention will be apparent from the following description, with reference to examples of the annexed drawings, wherein:
Fig. 1 is a cross-sectional view of a check valve, provided with a lockshield unit according to the present invention;
Fig. 2 is a perspective exploded view of the lockshield unit in Fig. 1;
Fig. 3 is an enlarged detail of the lockshield unit in Fig. 1, with the closure plug member in a first backward opening position of the sealing seat;
Fig. 4 is an enlarged detail similar to Fig. 3, with the closure plug member in a second forward closing position of the sealing seat;
Fig. from 5 to 8 show enlarged details of several possible solution of the means for connecting the control knob to the guide bush of the control stem of the closure plug member.

### DETAILED DESCRIPTION OF THE INVENTION

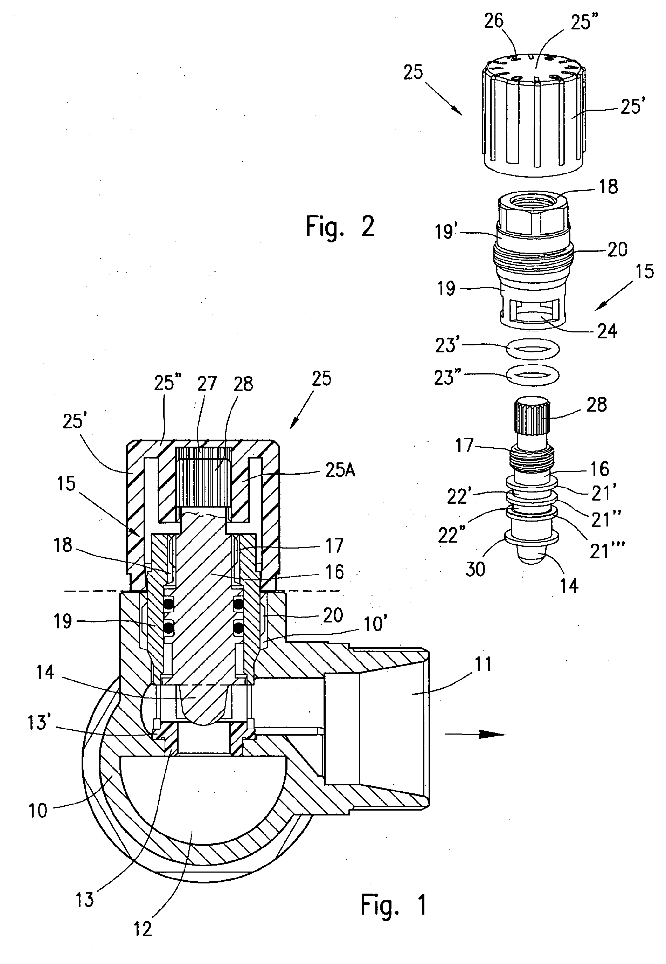

Fig. 1 shows, by way of non-limiting example, a check valve for the flow-rate of a thermal fluid circulating within a heating system, which valve is provided with a lockshield unit according to the present invention.

In the example in Fig. 1 the valve comprises a body 10 having an inlet 12 for the fluid communicating with an outlet 11, or vice versa, through a sealing seat 13 for a closure plug member 14 being a part of a lockshield unit 15 that is shown both in Fig. 1, and in the exploded view in Fig. 2.

The sealing seat 13 can be however shaped; for example, as shown herein, it can be formed by an annular element made of elastomeric material, P.T.F.E., which is configured with a peripheral flange 13' suitable to be accommodated within a corresponding seat of the valve body 10.

The annular element defining the sealing seat 13 has a cylindrical hole, whereas the closure plug member 14 has a slightly conical profile; thereby, by means of an axial displacement of the closure plug member 14 relative to the sealing seat 13, the width of the annular slit that is formed between counter-posed surfaces of the closure plug 14 and the inner hole of the sealing seat 13 can be changed in a controlled manner, whereby the fluid flow-rate can be adjusted, for example in a linear manner, as a function of the axial position and profile of the closure plug member 14.

The lockshield unit according to the present invention, besides in Fig. 1, is clearly shown in the exploded view in Fig. 2.

The lockshield unit 15 comprises the closure plug member 14 at a front end of a control stem 16 which is provided with a thread 17 to be screwed within an inner thread 18 at the upper end of a guide bush 19; the guide bush 19 further comprises a second outer thread 20 to be sealingly screwed, in turn, to a corresponding thread 10' of the valve body 10, as shown, or within a suitable seat of a manifold.

The control rod 16 of the closure plug member 14, in an intermediate position between the closure plug member 14 and the thread 17, comprises three annular flanges 21', 21 ", 21 "', which are axially spaced from each other, defining the housing seats 22', 22" for two toroidal gaskets or O-Rings 23', 23".

The guide bush 19 is further shaped with openings 24 for the fluid to flow therethrough, which in the assembled condition of the valve in Fig. 1, are in communication with the inlet opening 12 and with the central hole of the sealing seat 13.

The lockshield unit 15 finally comprises a control knob 25, which is operatively connected to the control rod 16 of the closure plug member 14, in order to allow for both a rotation and an axially sliding, as explained below.

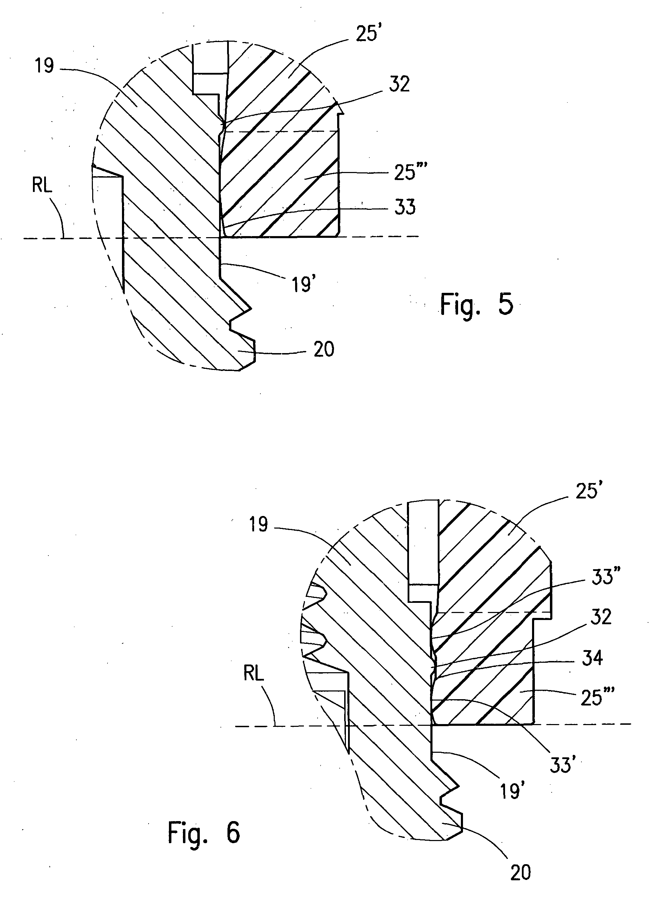

According to a first aspect of the invention, as will be better detailed in the several examples in Fig. 5 to 8, the control knob 25 is, unlike conventional solutions, pivotally supported by the guide bush 19 with the only possibility of angularly rotating, without any possibility of axial displacement.

The knob 25 has, as illustrated in the several figures, a cup shaped configured with an external cylindrical wall 25' closed by a rear wall 25", on which numbers and/or reference marks 26 have been written, which are indicative of the adjusted axial position of the closure plug member 14 relative to the sealing seat 13; while the rotation angle of the knob 25 required to move the closure plug member 14 from the full opened backward position to the forward closing position can be any, it is preferred that the pitch of the threads 17 and 18 is such as to allow for the full axial stroke of the closure plug member 14, for an angular rotation of the control knob 25 of less than 360°, preferably ranging between 320° and 340°, while maintaining a very short stroke of the closure plug member, equal to 6 mm, slightly higher or lower than that.

As discussed above, a first characteristic of the lockshield unit 15 is the possibility of the control knob 25 to rotate only angularly without being axially displaced relative to the guide bush 19 of the closure plug member 14, eventually relative to the body 10 of the valve or manifold wherein the lockshield unit 15 results to be screwed.

According to a further characteristic of the lockshield unit 15, the control rod 16 of the closure plug member 14 is operatively connected to the control knob 25, with the double possibility of angularly rotating and axially sliding relative to the knob.

The means suitable to simultaneously allow a rotatable connection and an axial sliding of the rod 16 relative to the knob 25 can be however configured.

Generally, both the rear end of the control stem 16, and a suitable housing seat within the knob 25 can have coupling surfaces, which longitudinally extend in the direction of the axis of rotation throughout the adjustment stroke of the closure plug member 14, which surfaces are configured to allow the control stem 16 of being rotatably drawn by the knob 25, and simultaneously, in order to allow an axial movement thereof during the rotation, relative to the knob 25. For example, said connection means can be flat surfaces, ribs, and longitudinal cavities, i.e. similarly shaped longitudinal indentations 27, 28, which are provided on the outer surface at the rear end of the control stem 16, and on the inner surface of a housing seat 25A inside the knob 25.

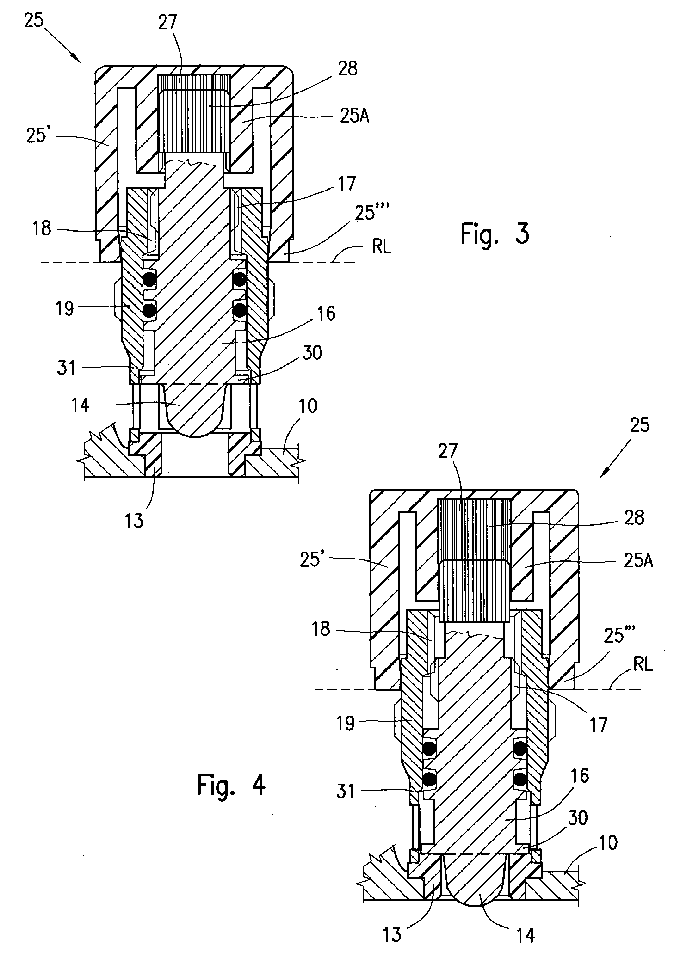

Fig. 3 and 4, compared to each other, illustrate the innovative characteristics of the lockshield unit 25 according to the invention; in Fig. 3 and 4 the same reference numbers have been used as Fig. 1 and 2 to indicate similar or equivalent parts.

Particularly, Fig. 3 shows the lockshield unit 15 in a first operating condition, or fully opened, wherein the closure plug member 14 and the control stem 16 are in a first totally backward position, and wherein the control knob 25 is, in turn, in a first angular position; on the other hand, Fig. 4 shows the same lockshield unit 15 in a second operating condition, or completely closed against the sealing seat 13, wherein the control knob 25 is, in turn, in a second angular position, and wherein the control stem 16 with closure plug member 14, during the rotation thereof, have carried out a forward sliding relative to the position in Fig. 3.

From the comparison in Fig. 3 and 4, it is noted that while the closure plug member 14 along with the control stem 16 have axially moved during the rotation thereof, the knob 25 has not experienced any axial displacement relative to a reference line RL, and it remained still in the same position.

A similar solution, as discussed above, from the constructional point of view, considerably simplifies the assembly mode, in that the knob 25 can be snap-fitted, either manually and/or automatically, i.e. removed, by means of a simple axial sliding, by exerting simple push or pull actions in the direction of the axis of rotation.

Referring back to Fig. 2, 3 and 4, it is finally noted that the control stem 16, at the closure plug member 14, has a stop flange 30 operating both in the fully opened position as shown in Fig. 3, wherein the flange 30 is abutted against an annular shoulder 31 at the front end of the guide bush 16, and in the closing position as shown in Fig. 4, wherein the flange 30 is abutted against the sealing seat 13.

Fig. 5 to 8 show, by way of example, several of the possible snap-fitting systems to pivotally couple the control knob 25 to the guide bush 19 body, i.e. suitable to allow for the knob 25 to only rotate, thereby preventing any axial displacement of the latter; some reference numbers of Fig.1 to 4 have been used throughout the figures to designate similar or equivalent parts.

All the described and illustrated fitting systems allow to connect and disconnect by snap-action the control knob 25 with respect to the guide bush 19 body in any position of the control knob 25.

A first solution is shown in Fig. 5 from which it can be noted that the guide bush 19, at a cylindrical surface 19', backwards of the outer thread 20, has an annular retention tooth 32 having a rounded profile, intended to be snap-engaged and/or engaged with a slight pressure to the inner surface of the front edge 25"' of the control knob 25.

More precisely, the front edge 25"' of the control knob 25 has an inner circular surface 33 having an arch-shaped profile intended to contact the cylindrical surface 19' of the guide bush 19, with a slight pressure or slight friction that maintains the knob 25, and accordingly the rod 16, in any adjusted condition of the closure plug member 14, comprised between the fully opened condition in Fig. 3 and the closing condition in Fig. 4, however leaving the knob 25 free to be manually rotated in both directions of rotation.

The assembly of the knob 25 and the operating connection thereof with the control rod 16 of the closure plug member 14 is carried out in the following manner: the guide bush 16 is generally carried out in a metal material, for example brass, while the control knob 25 is obtained by means of moulding from plastic material, for example PVC or other suitable synthetic material. Accordingly, both for the plastic material and for the same cup-shaped configuration of the knob 25, the front edge 25"' can slightly deform in the radial direction, in an elastic manner, when a certain pressure or axial push is exerted on the knob upon assembly, after inserting the rear end of the control stem 16 within the inner seat 25A of the knob 25, by engaging the respective teeth 27 and 28. The arch-shaped profile of the inner surface 33 of the edge 25"' of the knob, by interfering with the retention tooth 32, and also contacting the surface 19' of the guide bush 19, prevents the knob 25 to accidentally slip off.

In the case where the knob 25 is to be removed, for example to inspect or replace the lockshield unit 15, a simple pulling action is required to be carried out in order to disengage the latter from the retention tooth 32; in all cases, the knob 25 can be easily assembled and removed, in a quick manner, by carrying out a slight push or pull action in the axial direction.

Fig. 6 shows a second embodiment of the coupling means of the control knob 25 to the guide bush 19; also in this case, the guide bush 19 is provided with an annular retention tooth 32, as above. The solution in Fig. 6 differs from the solution in Fig. 5 in that the edge 25"' of the knob now has an inner surface having a double arch-shaped profile 33', 33", in the center thereof an annular cavity 34 is formed, wherein the retention tooth 32 is snap-engaged. For the rest, the assembly and the removal of the knob 25 according to the second example in Fig. 6, are carried out in a completely equal manner as what has been discussed above for the example in Fig. 5.

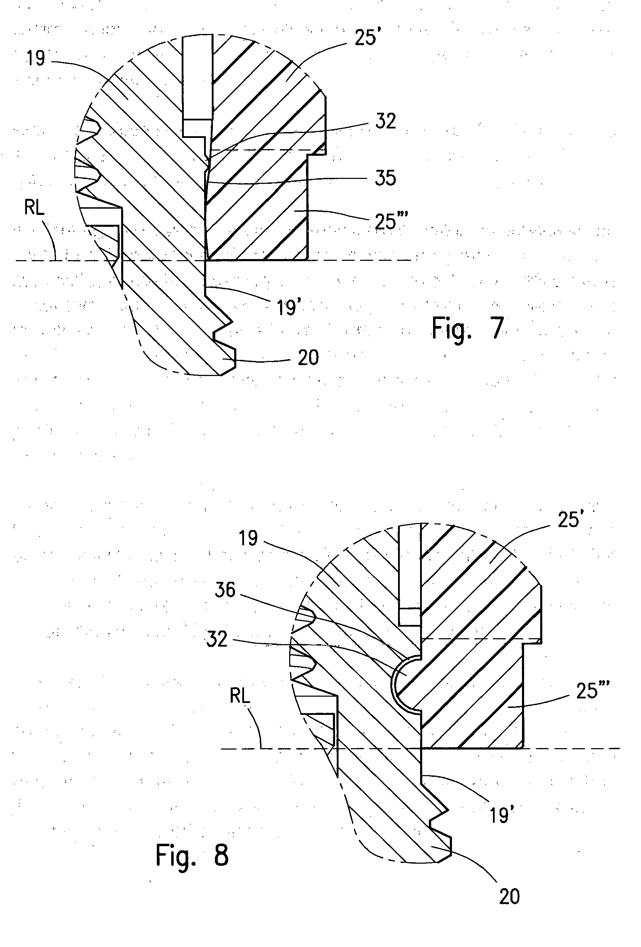

Fig. 7 shows a third embodiment of the snap-fitting means of the knob 25. Again, the guide bush 19 has the annular retention tooth 32; in a different manner, the front edge 25"' of the control knob has a forward-converging conical surface 35, slightly frictionally contacting the cylindrical surface 19' of the guide bush 19. Again, the assembly, removal and retaining of the knob 25 are carried out as discussed above.

Fig. 8 finally shows a fourth solution of the snap-fitting means of the knob 25; the solution in Fig. 8 differs from the preceding solutions, particularly from the solution in Fig. 6, in that the annular retention tooth 32 is provided on the inner surface of the front edge 25"' of the knob to be engaged within an annular cavity 36 provided at the cylindrical outer surface 19' of the guide bush 19. Even in this case, the assembly, the removal and the snap-fitting of the knob 25 are always carried out in the above-described manner.

As discussed above, the lockshield unit 15, according to the present invention, is suitable for being used both in individual valves and in manifolds for heating systems configured with one or more sealing seats and housing of the lockshield unit 15 as an integrating part of the manifold. Accordingly, other modifications and/or variations can be carried out to the whole lockshield unit and/or parts thereof, as a function of the constructional characteristics of the structure of the check valve and/or manifold, without however departing from the claims.

## Claims

1. A lockshield valve unit (15) suitable to be applied to a valve device and/or manifold (10) to control the flow rate of a thermal fluid flowing in a heating system, in which the lockshield valve unit (15) comprises:
a closure plug member (14) having a control stem (16) screwable into a guide bush (19), in which the control stem (16) is operatively connected to a control knob (25);
wherein:
the control knob (25) is connected directly to the guide bush (19) in an angularly rotatable manner only;
in which the control knob (25) and the guide bush (19) comprise first snap-connection means (32-35) for connecting and disconnecting the control knob (25) with respect to the guide bush (19) in any position of the control knob (25), conformed to allow a rotation of the control knob (25); and
in which the control knob (25) and the control stem (16) of the closure plug member (14) comprise second connection means conformed to allow the control stem (16) to be driven in rotation by and to axially slide in respect to the control knob (25);
**characterised in that**:
the guide bush (19) and the control knob (25) have frictional circular contact surfaces and said first snap-connection means comprises an annular retention tooth (32) having a rounded profile on an external surface (19') of the guide bush (19), and a circular internal surface (33-35) of an external cylindrical wall (25') of the control knob (25) having an arc-shaped profile to engage with the annular retention tooth (32).

2. The lockshield valve unit (15) according to claim 1, **characterised in that** said circular internal surface of the control knob (25) has a double arch-shaped profile (33', 33") conformed with an intermediate annular groove (34) for engaging the retention tooth (32) of the control knob (25).

3. The lockshield valve unit (15) according to claim 1, **characterised in that** said circular internal surface of the control knob (25) comprises a conical surface (35).

4. The lockshield valve unit (15) according to claim 1, **characterised in that** said second connection means comprises shaped surfaces which extend in the direction of the rotational axis of the control knob (25) and of the control stem (16) of the closure plug member (14).

5. The lockshield valve unit (15) according to claim 4, **characterised in that** said second connection means comprises engageable axial toothing (27, 28), on the control knob (25), respectively on the control stem (16) of the closure plug member (14).

6. The lockshield valve unit (15) according to anyone of the preceding claims, **characterised in that** the control stem (16), at the closure plug member (14), has a stop flange (30) operating both in a fully opened position, wherein the flange (30) is abutted against an annular shoulder (31) at the front end of the guide bush (19), and in a closing position, wherein the flange (30) is abutted against a sealing seat (13) for the closure plug member (14).

7. A valve device for controlling the flow rate of a thermal fluid, **characterised by** comprising a lockshield valve unit (15) according to one or more of claims 1 to 6.

8. A manifold for controlling the flow rate of a thermal fluid flowing in a heating system **characterised by** comprising at least one lockshield valve unit (15) according to one or more of claims 1 to 6.

## Patentansprüche

1. Rücklaufverschraubungs-Ventileinheit (15), die geeignet ist, um an eine Ventilvorrichtung und/oder Rohrverzweigung (10) angewandt zu werden, um die Strömungsrate eines Wärmeträgermediums, das in einem Heizsystem strömt, zu steuern, wobei die Rücklaufverschraubungs-Ventileinheit (15) Folgendes aufweist:
ein Verschlussstopfenelement (14), das eine Steuerspindel (16) hat, die in eine Führungsbuchse (19) geschraubt werden kann, wobei die Steuerspindel (19) betrieblich mit einem Steuerknopf (25) verbunden ist,
wobei der Steuerknopf (25) direkt mit der Führungsbuchse (19) nur in einer winkelig drehbaren Art verbunden ist,
wobei der Steuerknopf (25) und die Führungsbuchse (19) erste Schnappverbindungsmittel (32-35) zum Verbinden und Trennen des Steuerknopfs (25) in Bezug auf die Führungsbuchse (19) in einer beliebigen Position des Steuerknopfs (25) aufweisen, die ausgebildet sind, um eine Drehung des Steuerknopfs (25) zu erlauben, und
wobei der Steuerknopf (25) und die Steuerspindel (16) des Verschlussstopfenelements (14) zweite Verbindungsmittel aufweisen, die ausgebildet sind, um zu erlauben, dass die Steuerspindel (16) in Drehung durch den Steuerknopf (25) angetrieben wird und axial zu diesem gleitet,
**dadurch gekennzeichnet, dass**
die Führungsbuchse (19) und der Steuerknopf (25) kreisförmige Reibungskontaktoberflächen haben und das erste Schnappverbindungsmittel einen ringförmigen Haltezahn (32) aufweist, der ein gerundetes Profil auf einer externen Oberfläche (19') der Führungsbuchse (19) hat, und eine kreisförmige interne Oberfläche (33-35) einer externen zylindrischen Wand (25') des Steuerknopfs (25) ein bogenförmiges Profil hat, um in den ringförmigen Haltezahn (32) einzugreifen.

2. Rücklaufverschraubungs-Ventileinheit (15) nach Anspruch 1, **dadurch gekennzeichnet, dass** die kreisförmige interne Oberfläche des Steuerknopfs (25) ein doppeltes gewölbtes Profil (33', 33") hat, das mit einer ringförmigen Zwischenhohlkehle (34) zum Eingreifen in den Haltezahn (32) des Steuerknopfs (25) ausgebildet ist.

3. Rücklaufverschraubungs-Ventileinheit (15) nach Anspruch 1, **dadurch gekennzeichnet, dass** die kreisförmige interne Oberfläche des Steuerknopfs (25) eine kegelförmige Oberfläche (35) aufweist.

4. Rücklaufverschraubungs-Ventileinheit (15) nach Anspruch 1, **dadurch gekennzeichnet, dass** das zweite Verbindungsmittel geformte Oberflächen aufweist, die sich in die Richtung der Drehachse des Steuerknopfs (25) und der Steuerspindel (16) des Verschlussstopfenelements (14) erstrecken.

5. Rücklaufverschraubungs-Ventileinheit (15) nach Anspruch 4, **dadurch gekennzeichnet, dass** das zweite Verbindungsmittel eine auf dem Steuerknopf (25) beziehungsweise auf der Steuerspindel (16) des Verschlussstopfenelements (14) eingreifende axiale Verzahnung (27, 28) aufweist.

6. Rücklaufverschraubungs-Ventileinheit (15) nach einem der vorhergehenden Ansprüche, **dadurch gekennzeichnet, dass** die Steuerspindel (16) an dem Verschlussstopfenelement (14) einen Stoppflansch (30) hat, der sowohl in einer vollständig geöffneten Position, bei der der Flansch (30) an die ringförmige Schulter (31) an dem vorderen Ende der Führungsbuchse (19) anschlägt, als auch in einer Schließposition, bei der der Flansch (30) gegen einen Dichtungssitz (13) für das Verschlussstopfenelement (14) anschlägt, funktionieren kann.

7. Ventilvorrichtung zum Steuern der Strömungsrate eines Wärmeträgermediums, **dadurch gekennzeichnet, dass** sie eine Rücklaufverschraubungs-Ventileinheit (15) nach einem oder mehreren der Ansprüche 1 bis 6 aufweist.

8. Rohrverzweigung zum Steuern der Strömungsrate eines Wärmeträgermediums, das in einem Heizsystem strömt, **dadurch gekennzeichnet, dass** sie mindestens eine Rücklaufverschraubungs-Ventileinheit (15) nach einem der Ansprüche 1 bis 6 aufweist.

## Revendications

1. Unité de vanne d'arrêt à capuchon (15) convenant à une application à un dispositif de vanne et/ou à un collecteur (10) pour commander le débit d'un fluide thermique s'écoulant dans un système de chauffage, dans laquelle l'unité de vanne d'arrêt à capuchon (15) comprend :
un élément obturateur de fermeture (14) ayant une tige de commande (16) susceptible d'être vissée dans un manchon de guidage (19), dans lequel la tige de commande (16) est raccordée en service à un bouton de commande (25) ;
dans laquelle :
le bouton de commande (25) est raccordé directement au manchon de guidage (19) en mode de rotation angulaire uniquement ;
dans laquelle le bouton de commande (25) et le manchon de guidage (19) comprennent des premiers moyens d'assemblage par enclenchement (32-35) pour raccorder et dégager le bouton de commande (25) par rapport au manchon de guidage (19) dans une position quelconque du bouton de commande (25), conformés pour permettre une rotation du bouton de commande (25) ; et
dans laquelle le bouton de commande (25) et la tige de commande (16) de l'élément obturateur de fermeture (14) comprennent des seconds moyens d'assemblage conformés pour permettre à la tige de commande (16) d'être entraînée en rotation par le bouton de commande (25) et de coulisser axialement par rapport à celui-ci ;
**caractérisée en ce que** :
le manchon de guidage (19) et le bouton de commande (25) ont des surfaces de contact circulaires à friction et lesdits premiers moyens d'assemblage par enclenchement comprennent une dent de retenue annulaire (32) ayant un profil arrondi sur une surface externe (19') du manchon de guidage (19) et une surface circulaire interne (33-35) d'une paroi cylindrique externe (25') du bouton de commande (25) ayant un profil en forme d'arc pour s'engager sur la dent de retenue annulaire (32).

2. Unité de vanne d'arrêt à capuchon (15) selon la revendication 1, **caractérisée en ce que** ladite surface circulaire interne du bouton de commande (25) a un profil en forme d'arc double (33', 33'') conformé avec une rainure annulaire intermédiaire (34) pour s'engager sur la dent de retenue (32) du bouton de commande (25).

3. Unité de vanne d'arrêt à capuchon (15) selon la revendication 1, **caractérisée en ce que** ladite surface circulaire interne du bouton de commande (25) comprend une surface conique (35).

4. Unité de vanne d'arrêt à capuchon (15) selon la revendication 1, **caractérisée en ce que** lesdits seconds moyens d'assemblage comprennent des surfaces façonnées qui s'étendent dans la direction de l'axe de rotation du bouton de commande (25) et de la tige de commande (16) de l'élément obturateur de fermeture (14).

5. Unité de vanne d'arrêt à capuchon (15) selon la revendication 4, **caractérisée en ce que** lesdits seconds moyens d'assemblage comprennent une denture axiale engageable (27, 28), sur le bouton de commande (25), respectivement sur la tige de commande (16) de l'élément obturateur de fermeture (14).

6. Unité de vanne d'arrêt à capuchon (15) selon l'une des revendications précédentes, **caractérisée en ce que** la tige de commande (16), sur l'élément obturateur de fermeture (14), présente une bride d'arrêt (30) opérant à la fois en position complètement ouverte, dans laquelle la bride (30) est appuyée contre un épaulement annulaire (31) sur l'extrémité avant du manchon de guidage (19), et en position de fermeture, dans laquelle la bride (30) est appuyée contre un siège d'étanchéité (13) pour l'élément obturateur de fermeture (14).

7. Dispositif de soupape pour commander le débit d'un fluide thermique, **caractérisé en ce qu'**il comprend une unité de vanne d'arrêt à capuchon (15) selon une ou plusieurs des revendications 1 à 6.

8. Collecteur pour commander le débit d'un fluide thermique s'écoulant dans un système de chauffage, **caractérisé en ce qu'**il comprend au moins une unité de vanne d'arrêt à capuchon (15) selon une ou plusieurs des revendications 1 à 6.
